# EUROPEAN PATENT APPLICATION

(11) **EP 3 324 353 A1**
(43) Date of publication of application: **23.05.2018**
(21) Application number: 17202864.9
(22) Date of filing: 21.11.2017
(51) Int. Cl.: G06Q 20/20

(54) **CHECKOUT SYSTEM AND SETTLEMENT APPARATUS UTILIZED IN THE SAME**

(30) Priority: 22.11.2016 JP 2016226513
(71) Applicant: Toshiba TEC Kabushiki Kaisha, Tokyo 141-8562 (JP)
(72) Inventor: GOTANDA, Tsuyoshi, Shinagawa-ku,, Tokyo 141-8562 (JP); NAKAJIMA, Takashi, Shinagawa-ku,, Tokyo 141-8562 (JP); SUGITA, Nobuhiro, Shinagawa-ku,, Tokyo 141-8562 (JP); MIYAZAKI, Jun, Shinagawa-ku,, Tokyo 141-8562 (JP); OTANI, Yuna, Shinagawa-ku,, Tokyo 141-8562 (JP); GOTOU, Chikashi, Shinagawa-ku,, Tokyo 141-8562 (JP); SUSAKI, Akiko, Shinagawa-ku,, Tokyo 141-8562 (JP)
(74) Representative: Takeuchi, Maya

(57) **Abstract**

A checkout system includes a registration apparatus that generates a settlement data necessary for settlement of a transaction, and a settlement apparatus that performs a settlement processing based on the settlement data transmitted from the registration apparatus through a network. The settlement apparatus monitors whether the registration apparatus is in an operating state or a non-operating state. The settlement apparatus operates in a link mode in which the settlement apparatus is linked to the registration apparatus if the registration apparatus is in the operating state, or operates in a stand-alone mode in which the settlement apparatus is not linked to the registration apparatus if the registration apparatus is in the non-operating state.

## Description

### FIELD

The preset invention relates to the field of checkout technologies in general, and embodiments described herein relate in particular to a semi-self-type checkout system, a settlement apparatus utilized in the system, and a method for enabling the settlement apparatus to operate in a link mode or a stand-alone mode.

### BACKGROUND

Conventionally, a semi-self-type checkout system is utilized as a checkout system for large scale retailers. In the semi-self-type checkout system, a registration apparatus that generates a settlement data necessary for transaction settlement for each transaction and a settlement apparatus that executes a transaction settlement processing based on the settlement data are separately installed in a store. In general, the registration apparatus is operated by a store clerk and the settlement apparatus is operated by a customer.

In such checkout system, if a customer takes time to operate the settlement apparatus, the next customer in line has to wait for settlement. In order to avoid such a situation, a plurality of settlement apparatuses is linked to one registration apparatus in general.

In the meantime, in a store where this type of checkout system is introduced, the number of registration apparatuses which are simultaneously operating is determined depending on the degree of customer congestion. The number of registration apparatuses which are operating increases at the time customers are crowded, and thus wait time for settlement by customers decreases. In contrast, the number of registration apparatuses which are operating is decreased at the time customers are not so crowded, and thus time for which a store clerk waits for a customer decreases.

Meanwhile, the settlement apparatus is always in a standby state waiting for a command or the like from the registration apparatus. Accordingly, at the time the linked registration apparatus is not operating, the settlement apparatus maintains the standby state, or otherwise enters a dormant state even though no command is transmitted from the registration apparatus, and thus resources of the system are wasted. From such a point of view, it is proposed or required to effectively use resources of the system, for example, by enabling the settlement apparatuses to be operated independent of the registration apparatus at the time the linked registration apparatus is not operating.

To this end, there is provided a checkout system comprising:
a registration apparatus configured to generate settlement data necessary for settlement of transaction;
a settlement apparatus configured to perform settlement processing on the basis of the settlement data generated by the registration apparatus; and
a network configured to connect the registration apparatus with the settlement apparatus to facilitate transmission of the settlement data from the registration apparatus to the settlement apparatus;
wherein the settlement apparatus comprises:
   a monitoring module configured to monitor whether the registration apparatus is in an operating state or a non-operating state, and
   a mode control module configured to enable the settlement apparatus to operate in a link mode in which the settlement apparatus is linked to the registration apparatus if the registration apparatus is in the operating state or to enable the settlement apparatus to operate in a stand-alone mode in which the settlement apparatus is not linked to the registration apparatus if the registration apparatus is in the non-operating state.

Preferably, the registration apparatus comprises a state storage unit configured to store information for identifying whether the registration apparatus is in a sign-off state in which the registration apparatus waits for a sign-on operation or the registration apparatus is in a sign-on state in which the sign-on is being received, and
wherein the monitoring module of the settlement apparatus recognizes that the registration apparatus is in the operating state if the information stored in the state storage unit indicates the sign-on state, and the registration apparatus is in the non-operating state if the information stored in the state storage unit indicates the sign-off state.

Preferably still, the settlement apparatus accepts a charge operation for electronic money in the stand-alone mode.

In the above system, the non-operating state is preferably a standby state or a sleep state.

Preferably yet, the system comprises a plurality of settlement apparatuses and a plurality of registration apparatus.

In the above system, the network preferably comprises a wired network.

Suitably, the network comprises a wireless network.

Suitably still, the network comprises a partially wired network and a partially wireless network.

The invention also relates to a settlement apparatus which is connected to a registration apparatus through a network, comprising:
a settlement module configured to perform settlement processing on the basis of settlement data, necessary for settlement of a transaction, which is transmitted from the registration apparatus through the network;
a monitoring module configured to monitor whether the registration apparatus is in an operating state or a non-operating state; and
a mode control module configured to operate the settlement apparatus in a link mode in which the settlement apparatus is linked to the registration apparatus if the registration apparatus is in the operating state or to operate the settlement apparatus in a stand-alone mode in which the settlement apparatus is not linked to the registration apparatus if the registration apparatus is in the non-operating state.

Conveniently, the settlement apparatus accepts a charge operation for electronic money in the stand-alone mode.

The invention further concerns a control method for operating a settlement apparatus that performs settlement processing on the basis of a settlement data from a registration apparatus in a link mode or a stand-alone mode, comprising:
monitoring whether the registration apparatus is in an operating state or a non-operating state; and
operating the settlement apparatus in the link mode in which the settlement apparatus is linked to the registration apparatus if the registration apparatus is in the operating state or in a stand-alone mode in which the settlement apparatus is not linked to the registration apparatus if the registration apparatus is in the non-operating state.

Preferably, the method further comprises:
storing information for identifying whether the registration apparatus is in a sign-off state in which the registration apparatus waits for a sign-on operation or the registration apparatus is in a sign-on state in which the sign-on is being received, and
recognizing that the registration apparatus is in the operating state if the information stored indicates the sign-on state, and the registration apparatus is in the non-operating state if the information stored indicates the sign-off state.

Preferably still, the method further comprises:
accepting a charge operation for electronic money in the stand-alone mode.

In the above method, the non-operating state is preferably a standby state.

Also in the above method, the non-operating state is preferably a sleep state.

Suitably, the method comprises operating a plurality of settlement apparatuses on the basis of settlement data from a plurality of registration apparatus.

Suitably still, the method comprises operating the settlement apparatus on the basis of settlement data from the registration apparatus in the link mode.

Suitably yet, the method comprises operating the settlement apparatus on the basis of settlement data from the registration apparatus in the stand-alone mode.

Typically, the method further comprises:
accepting a charge operation for electronic money in the stand-alone mode.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a schematic diagram illustrating a checkout system according to the present embodiment;
FIG. 2 is a block diagram illustrating a main circuit configuration of a registration apparatus and a settlement apparatus illustrated in FIG. 1;
FIGS. 3A and 3B are schematic diagrams illustrating a main data storage unit formed in each auxiliary storage unit in the registration apparatus and the settlement apparatus;
FIGS. 4A and 4B are schematic diagrams illustrating a main data storage unit formed in each RAM in the registration apparatus and the settlement apparatus;
FIG. 5 is a flowchart illustrating a sequence of main information processing performed by a CPU in the registration apparatus;
FIG. 6 is a flowchart illustrating a sequence of main information processing performed by a CPU in the settlement apparatus;
FIG. 7 is a flowchart illustrating a sequence of main information processing performed by the CPU in the settlement apparatus;
FIG. 8 is a view illustrating an example of a settlement wait screen displayed on a touch panel in the settlement apparatus;
FIG. 9 is a view illustrating an example of a payment method selection screen on the touch panel in the settlement apparatus;
FIG. 10 is a view illustrating an example of a charge screen on the touch panel in the settlement apparatus; and
FIG. 11 is a view illustrating an example of a charge amount selection screen on the touch panel in the settlement apparatus.

### DETAILED DESCRIPTION

According to an embodiment, a checkout system includes a registration apparatus that generates a settlement data necessary for settlement of transaction, and a settlement apparatus that performs a settlement processing based on the settlement data transmitted from the registration apparatus through a network. The settlement apparatus includes a monitoring module and a mode control module. The monitoring module monitors whether the registration apparatus is in an operating state or a non-operating state. The mode control module enables the settlement apparatus to operate in a link mode in which the settlement apparatus is linked to the registration apparatus if the registration apparatus is in the operating state or in a stand-alone mode in which the settlement apparatus is not linked to the registration apparatus if the registration apparatus is in the non-operating state.

Hereinafter, an embodiment of a checkout system capable of effectively utilizing resources thereof is described with reference to the accompanying drawings.

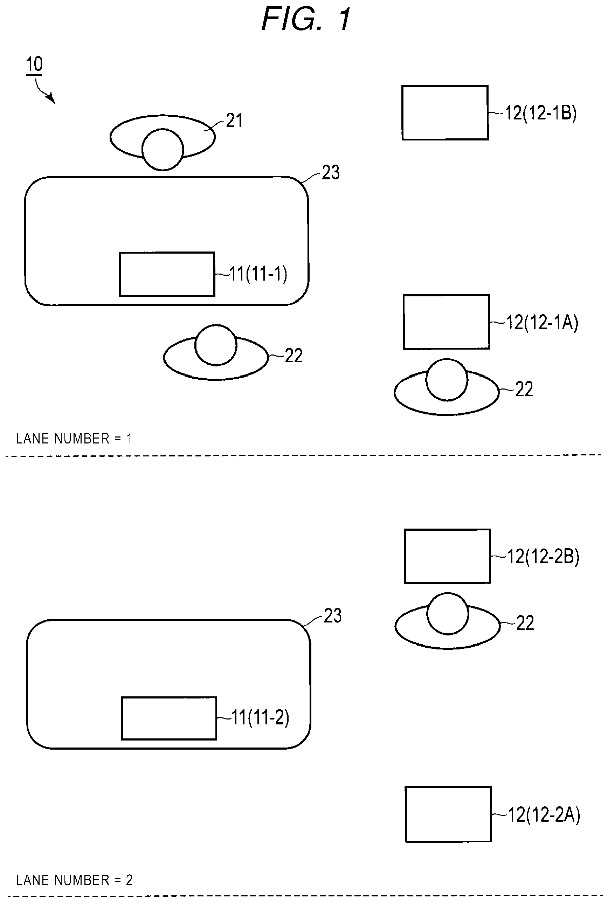

FIG. 1 is a schematic diagram illustrating a checkout system 10 according to the present embodiment. The checkout system 10 includes a plurality of registration apparatuses 11 and a plurality of settlement apparatuses 12. The number of settlement apparatuses 12 are more than that of registration apparatuses 11.

The registration apparatus 11 has functions of sales registration of a commodity, generation of a settlement data, and transmission of the settlement data. The sales registration of a commodity is to register the sales data of the commodity in a memory based on an input data. For example, by scanning a barcode attached to the commodity and inputting the barcode, the registration apparatus 11 registers the sales data such as the number of sales of the commodity, and the amount of sales in the memory. If registration of sales registration of all the commodities sold as one transaction is completed, the registration apparatus 11 generates a settlement data necessary for settlement of the transaction based on the sales data of each commodity registered in the memory. The settlement data includes a commodity code of the commodity which is sales-registered, a commodity name, a unit price, the number of sales, the amount of sales, a total number of sales, and a total amount of sales. The registration apparatus 11 transmits the settlement data to the settlement apparatus 12.

The settlement apparatus 12 has a function of a settlement processing. The settlement apparatus 12 receives an input of a payment amount based on the settlement data received from the registration apparatus 11, and performs settlement of the sales transaction of the commodity according to the settlement data and the payment amount data. Cash, a credit card, an electronic money, and the like are included as the payment method.

The registration apparatus 11 and the settlement apparatus 12 are installed at each checkout lane in a store. The number of checkout lanes is not limited. The number of registration apparatuses 11 installed at one checkout lane is one, and the number of settlement apparatuses 12 is arbitrary determined. An example is illustrated in FIG. 1 in which one registration apparatus 11 and two settlement apparatuses 12 are provided at each of two checkout lanes.

In FIG. 1, the registration apparatus 11 is disposed on a work table 23. The work table 23 has a rectangular top plate. A plurality of work tables 23 is arranged such that longitudinal directions of the top plates are approximately parallel with each other, and work spaces for store clerk 21 and passages (checkout lane) for shopper 22 are alternately formed.

Each checkout lane is assigned with a unique number. In FIG. 1, a lane number "1" is assigned to the checkout lane on an upper side in the figure and a lane number "2" is assigned to the checkout lane on a lower side in the figure. One registration apparatus 11 (11-1) and two settlement apparatuses 12 (12-1A and 12-1B) are disposed at the checkout lane of the lane number "1". One registration apparatus 11 (11-2) and two settlement apparatuses 12 (12-2A and 12-2B) are also disposed at the checkout lane of the lane number "2".

The registration apparatus 11 is linked to two settlement apparatuses 12 disposed at the same checkout lane. The settlement data is transmitted to one of the linked two settlement apparatuses 12. The settlement apparatus 12 which receives the data is arbitrary designed. Otherwise, the settlement data may be transmitted to each of the two settlement apparatuses 12.

The checkout system 10 is a semi-self type system. The store clerk 21 is an operator of the registration apparatus 11. The shopper 22 whose purchase commodity is registered in the registration apparatus 11 becomes an operator of the settlement apparatus 12.

It does not mean that all the store clerks can operate the registration apparatus 11. Only the store clerk 21 having operation authority can operate the registration apparatus 11. Accordingly, the registration apparatus 11 has an operator authentication function of sign-on and sign-off. If receiving the sign-on operation in a sign-off state for waiting for the sign-on by the operator, the registration apparatus 11 executes an authentication for the operator who performs the sign-on operation. If the authentication is successfully performed, the registration apparatus 11 sets a status to the sign-on state. As the registration apparatus 11 enters the sign-on state, functions of the registration apparatus 11, such as a commodity sales registration, become enabled. Meanwhile, if receiving the sign-off operation in the sign-on state, the registration apparatus 11 sets the status to the sign-off state. As the status of the registration apparatus 11 enters the sign-off state, the functions such as a commodity sales registration become disabled.

In the present embodiment, the registration apparatus 11 whose status is in the sign-on state is defined as the registration apparatus 11 in an operating state. In addition, the registration apparatus 11 whose status is in the sign-off state is defined as the registration apparatus 11 in a non-operating state.

Meanwhile, since the shopper 22 becomes an operator, the settlement apparatus 12 does not have the operator authentication function. The settlement apparatus 12 operates in a link mode in which the settlement apparatus is linked to the registration apparatus 11 if the linked registration apparatus 11 is in the operating state, or operates in a stand-alone mode in which the settlement apparatus is not linked to the registration apparatus 11 if the linked registration apparatus 11 is in the non-operating state. In the link mode, the settlement apparatus 12 enables the settlement processing. In the stand-alone mode, the settlement apparatus 12 does not perform the settlement processing. In the present embodiment, in the stand-alone mode, the settlement apparatus 12 enables a charge operation for the electronic money.

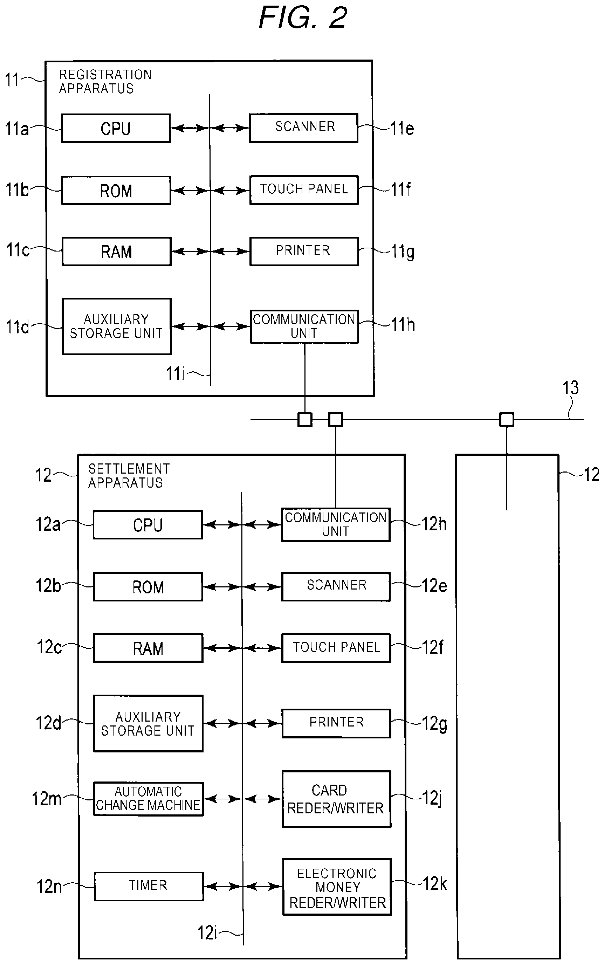

FIG. 2 is a block diagram illustrating a main circuit configuration of the registration apparatus 11 and the settlement apparatus 12. Both the registration apparatus 11 and the settlement apparatus 12 at each checkout lane are connected to a LAN (Local Area Network) 13, i.e., in-store network. While not illustrated, a server is also connected to the LAN 13. The server stores a commodity database in which commodity information such as a commodity name and a unit price is set in association with a commodity code of each commodity. The server may further store other databases.

The registration apparatus 11 and the settlement apparatus 12 perform reception/transmission of information therebetwenn through the LAN 13. Another communication network such as the Internet or the wireless LAN may be used instead of the LAN 13. In addition, information such as settlement data may be exchanged between the registration apparatus 11 and the settlement apparatus 12 through the server. In addition, the registration apparatus 11 and the settlement apparatus 12 provided at the same checkout lane may be connected to each other through a communication network, and the registration apparatuses 11 respectively provided at different checkout lanes may be connected to each other through another communication network.

The registration apparatus 11 includes a CPU (Central Processing Unit) 11a, a ROM (Read Only Memory) 11b, a RAM (Random Access Memory) 11c, an auxiliary storage unit 11d, a scanner 11e, a touch panel 11f, a printer 11g, a communication unit 11h, and a transmission system 11i.

The CPU 11a is connected to the ROM 11b, the RAM 11c, and the auxiliary storage unit 11d through the transmission system 11i to configure a computer. The CPU 11a acts as a central unit of the computer. The CPU 11a controls each unit to realize various functions as the registration apparatus 11 according to an operating system, middleware, and an application program stored in the ROM 11b and the RAM 11c.

The ROM 11b acts as a main memory unit of the computer. The ROM 11b stores the operating system. The ROM 11b stores in some cases the middleware or the application program. The ROM 11b also stores in some cases data to be referred to if the CPU 11a performs various processing.

The RAM 11c acts as the main memory unit of the computer. The RAM 11c stores data to be referred to at the time the CPU 11a performs various processing. The RAM 11c is also used as a so-called work area for storing data temporarily used by the CPU 11a in performing various processing.

The auxiliary storage unit 11d acts as an auxiliary storage unit of the computer. The auxiliary storage unit 11d stores data used by the CPU 11a for performing various processing or data generated in processing by the CPU 11a. As the auxiliary storage unit 11d, for example, an EEPROM (Electric Erasable Programmable Read-Only Memory), an HDD (Hard Disc Drive), an SSD (Solid State Drive) or the like can be used. The application program stored in the ROM 11b or the auxiliary storage unit 11d includes a control program described in relation to information processing performed by the registration apparatus 11.

The scanner 11e reads a barcode attached to a commodity to acquire a commodity code of the commodity.

The touch panel 11f includes a display device and a touch sensor. There are the touch panel 11f for store clerk and the touch panel 11f for customer. The touch panel 11f for store clerk is provided on the work table 23 such that a display screen faces a work space of the store clerk 21 where the store clerk stands. The touch panel 11f for customer is provided on the work table 23 such that a display screen faces a passage for the shopper 22.

The printer 11g prints various character strings, images, and the like on a receipt paper to issue a receipt.

The communication unit 11h is connected to the LAN 13. The communication unit 11h performs a data communication with a plurality of settlement apparatuses 12 connected in a link state through the LAN 13. The communication unit 11h can also perform a data communication with another registration apparatus 11 through the LAN 13.

The transmission system 11i transmits data receiving/transmitting between the CPU 11a, the ROM 11b, the RAM 11c, the auxiliary storage unit 11d, the scanner 11e, the touch panel 11f, the printer 11g, and the communication unit 11h. A well-known transmission system including various buses such as a system bus, data bus and the like, and various interface circuits for connecting the buses to each unit can be used as the transmission system 11i. As the hardware of the registration apparatus 11 described above, for example, an existing POS terminal can be utilized.

The settlement apparatus 12 includes a CPU 12a, a ROM 12b, a RAM 12c, an auxiliary storage unit 12d, a scanner 12e, a touch panel 12f, a printer 12g, a communication unit 12h, a card reader/writer 12j, an electronic money reader/writer 12k, an automatic change machine 12m, a timer 12n, and a transmission system 12i.

The card reader/writer 12j reads data recorded in a card and writes data to the card. The card includes a settlement card such as a credit card, a debit card, a prepaid card or the like.

The electronic money reader/writer 12k reads and writes data relating to an electronic money from and to an information recording medium such as an IC card, or an information communication terminal such as a smartphone or a tablet terminal.

The automatic change machine 12m receives coins and bills deposited. The automatic change machine 12m discharges coins and bills as change.

The timer 12n measures a predetermined time under control of the CPU 12a.

The CPU 12a, the ROM 12b, the RAM 12c, the auxiliary storage unit 12d, the scanner 12e, the touch panel 12f, the printer 12g, the communication unit 12h, and the transmission system 12i have the same functions as those of the registration apparatus 11 described above. The CPU 12a is connected to the ROM 12b, the RAM 12c, and the auxiliary storage unit 12d through the transmission system 12i to configure a computer. The CPU 12a controls each unit to realize various operations as the settlement apparatus 12 according to an operating system, middleware, and an application program stored in the ROM 12b and the RAM 12c. The application program stored in the ROM 12b or the auxiliary storage unit 12d includes a control program described in relation to information processing performed by the settlement apparatus 12. As the hardware of the settlement apparatus 12 described above, for example, a POS terminal corresponding to an existing self-checkout system can be utilized.

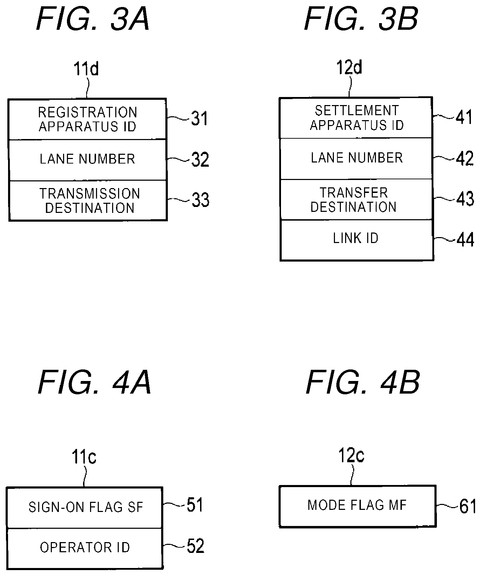

As illustrated in FIG. 3A, in the checkout system 10 including the registration apparatus 11 and the settlement apparatus 12 having the configurations as described above, data storage units 31, 32, and 33 are formed in the auxiliary storage unit 11d of the registration apparatus 11.

The data storage unit 31 is an area for storing a registration apparatus ID. Each registration apparatus 11 has a unique registration apparatus ID assigned thereto. Each registration apparatus 11 stores the registration apparatus ID thereof in the data storage unit 31. Hereinafter, the data storage unit 31 is referred to as a registration apparatus ID storage unit 31.

The data storage unit 32 is an area for storing lane number. A unique lane number is assigned to the checkout lane where each registration apparatus 11 is disposed. Each registration apparatus 11 stores a lane number of the checkout lane at which the registration apparatus 11 is provided in the data storage unit 32. Hereinafter, the data storage unit 32 is referred to as a lane number storage unit 32.

The data storage unit 33 is an area for storing transmission destination information. The transmission destination information is used to identify the settlement apparatus 12 serving as a transmission destination of the settlement data. One of the plurality of settlement apparatuses 12 which are disposed at the same checkout lane as the registration apparatus 11 and are linked with the registration apparatus 11 becomes the transmission destination of the settlement data. Each settlement apparatus 12 has a unique ID assigned in advance. Each registration apparatus 11 stores the ID of the settlement apparatus 12 set in the settlement data transmission destination in the data storage unit 33 as the transmission destination information. Hereinafter, the data storage unit 33 is referred to as a transmission destination storage unit 33.

As illustrated in FIG. 3B, in the checkout system 10, data storage units 41, 42, 43, and 44 are formed in the auxiliary storage unit 12d of the settlement apparatus 12.

The data storage unit 41 is an area for storing a settlement apparatus ID. Each settlement apparatus 12 has a unique settlement apparatus ID assigned thereto. Each settlement apparatus 12 stores the settlement apparatus ID thereof in the data storage unit 41. Hereinafter, the data storage unit 41 is referred to as a settlement apparatus ID storage unit 41.

The data storage unit 42 is an area for storing a lane number. A unique lane number is assigned to the checkout lane where each settlement apparatus 12 is placed. Each settlement apparatus 12 stores the lane number of the checkout lane at which the settlement apparatus 12 is placed in the data storage unit 42. Hereinafter, the data storage unit 42 is referred to as a lane number storage unit 42.

The data storage unit 43 stores transfer destination information. The transfer destination information is used to identify another settlement apparatus 12 which becomes a transmission destination of settlement data. If the settlement apparatus 12 receiving the settlement data cannot perform a settlement processing, the settlement apparatus 12 receiving the settlement data transfers the settlement data to another settlement apparatus 12 disposed at the same checkout lane as the settlement apparatus 12 receiving the settlement data. Each settlement apparatus 12 stores the ID of another settlement apparatus 12 which is the transfer destination of the settlement data in the data storage unit 43 as transfer destination information. Hereinafter, the data storage unit 43 is referred to as a transfer destination storage unit 43.

In the present embodiment, two settlement apparatuses 12 are linked to one registration apparatus 11 at one checkout lane. Accordingly, one settlement apparatus 12 to which the settlement data is transmitted from the registration apparatus 11 can set another settlement apparatus 12 as a transfer destination, but another settlement apparatus 12 cannot set the transfer destination. Accordingly, another settlement apparatus 12 stores no transfer destination information in the transfer destination storage unit 43. Alternatively, information indicating that no transfer destination is stored in the transfer destination storage unit 43.

The data storage unit 44 stores link ID information. As described above, each settlement apparatus 12 is linked to the registration apparatus 11 disposed in the same checkout lane as each settlement apparatus 12. Each settlement apparatus 12 stores a registration apparatus ID of the linked registration apparatus 11 as link ID information in the data storage unit 44. Hereinafter, the data storage unit 44 is referred to as a link ID storage unit 44.

As illustrated in FIG. 4A, in the checkout system 10, data storage units 51 and 52 are formed in the RAM 11c of the registration apparatus 11.

The data storage unit 51 is an area for storing a sign-on flag SF. The sign-on flag SF represents a status of the registration apparatus 11. The status includes a sign-off state and a sign-on state described above. If being in the sign-off state, the sign-on flag SF is "0". If being in a sign-on execution command state, the sign-on flag SF is "1". Hereinafter, the data storage unit 51 is referred to as a sign-on flag memory 51. The sign-on flag memory 51 functions as a status storage unit.

The data storage unit 52 is an area for storing an operator ID. Each store clerk 21 to which an operation authority of the registration apparatus 11 is given is assigned with a unique operator ID. The registration apparatus 11 receives an operator ID at the time of sign-on. If authentication of the operator 21 identified by the operator ID is successful, the registration apparatus 11 stores the operator ID in the data storage unit 52. Hereinafter, the data storage unit 52 is referred to as an operator ID memory 52.

As illustrated in FIG. 4B, in the checkout system 10, a data storage unit 61 is formed in the RAM 12c of the settlement apparatus 12.

The data storage unit 61 stores a mode flag MF. The mode flag MF represents an operation mode of the settlement apparatus 12. The operation mode includes the link mode and the stand-alone mode described above. If being in the link mode, the mode flag MF becomes "1". If being in the stand-alone mode, the mode flag MF becomes "0". Hereinafter, the data storage unit 61 is referred to as a mode flag memory 61.

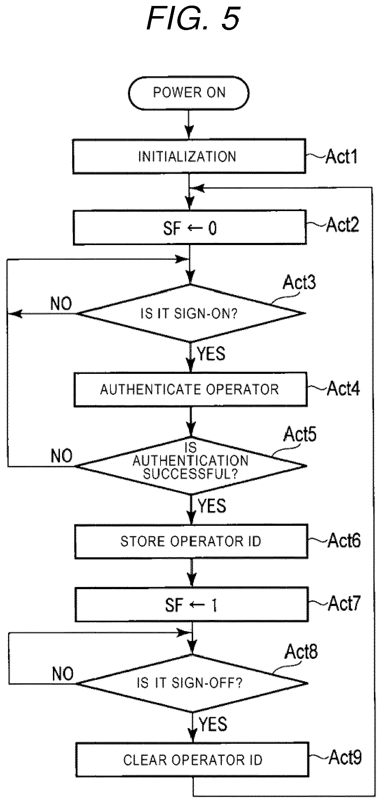

FIG. 5 is a flowchart illustrating a main sequence of information processing performed by the CPU 11a of the registration apparatus 11. If the registration apparatus 11 is powered on, the CPU 11a starts the information processing of the sequence illustrated in the flowchart of FIG. 5. The processing follows a control program stored in the ROM 11b or the auxiliary storage unit 11d. Contents of the processing described below are merely examples, and various processing capable of achieving the same results can be appropriately used.

If the power supply is turned on, the CPU 11a performs initialization in Act 1. The RAM 11c is cleared by the initialization. In addition, devices such as the scanner 11e, the touch panel 11f, and the printer 11g are reset.

If the initialization is completed, the CPU 11a sets the sign-on flag SF to "0" in Act 2. The CPU 11a waits for a sign-on operation in Act 3. Therefore, the registration apparatus 11 maintains a sign-off state until the sign-on operation is performed after the power is turned on.

The store clerk 21 who operates the registration apparatus 11 performs the sign-on operation. For example, an image of a "sign-on reception" button is displayed in a part of a screen on the touch panel 11f of the registration apparatus 11 in a sign-off state. Then, the store clerk 21 touches the "sign-on reception" button. With this operation, an input screen of an operator ID is displayed on the touch panel 11f, and thus, the store clerk 21 inputs his or her operator ID.

If the above operation is performed, the CPU 11a recognizes that a sign-on operation is performed. If the sign-on operation is performed (YES in Act 3), the CPU 11a authenticates an operator in Act 4. The CPU 11a determines whether or not the operator ID input by the sign-on operation matches an operator ID of each store clerk 21 to which an operation authority is given. The operator ID of each store clerk 21 to which the operation authority is given is stored in, for example, the auxiliary storage unit 11d. The operator ID of each store clerk 21 to which the operation authority is given may be stored in a server connected through the LAN 13.

The CPU 11a determines authentication results of the operator ID in Act 5. If the operator ID input by the sign-on operation does not match the operator ID of one of the store clerks 21 to which the operation authority is given and thus it is determined that authentication is failed (NO in Act 5), the CPU 11a returns to processing in Act 3. The CPU 11a waits for the sign-on operation again.

If the authentication is successful because the operator ID input by the sign-on operation matches the operator ID of one of the store clerks 21 to which the operation authority is given and thus it is determined that the authentication is successful (YES in Act 5), the CPU 11a stores the operator ID whose authentication is successful in the operator ID memory 52 in Act 6. In addition, the CPU 11a sets the sign-on flag SF to "1" in Act 7.

As such, if authentication of an operator who performs the sign-on operation is successful, the registration apparatus 11 sets a sign-on state therein. In the sign-on state, the registration apparatus 11 can perform various processing such as sales registration of commodity, generation of settlement data, and transmission of the settlement data.

In the meantime, if the sales registration of commodity is completed and the settlement data is generated, the CPU 11a of the registration apparatus 11 transmits the settlement data together with a settlement apparatus ID stored in the transmission destination storage unit 33 to the network 13. With this operation, the settlement data is received by the settlement apparatus 12 that stores the settlement apparatus ID transmitted together with the settlement data in the settlement apparatus ID storage unit 41.

If the settlement apparatus 12 receiving the settlement data can perform settlement processing, the CPU 12a of the settlement apparatus 12 transmits an execution command with the address of the registration apparatus 11 as a destination to the network 13. In contrast to this, if the settlement apparatus 12 cannot perform the settlement processing due to reasons such as busy or malfunction, the CPU 12a of the settlement apparatus 12 transmits the settlement data together with the settlement apparatus ID stored in the transfer destination storage unit 43 to the network 13. With this operation, the settlement data is received by the settlement apparatus 12 that stores the settlement apparatus ID transmitted together with the settlement data in the settlement apparatus ID storage unit 41. The settlement data is transferred to another settlement apparatus 12 identified by the settlement apparatus ID stored in the transfer destination storage unit 43.

If another settlement apparatus 12 can perform the settlement processing, the CPU 12a of another settlement apparatus 12 transmits an settlement-acceptable command with the address of the registration apparatus 11 as a destination to the network 13. In contrast to this, if another settlement apparatus 12 cannot perform the settlement processing due to a reason such as busy or malfunction, the CPU 12a of another settlement apparatus 12 transmits a settlement-unacceptable command with the address of the registration apparatus 11 as a destination to the network 13.

The settlement-acceptable command or a settlement-unacceptable command is received by the registration apparatus 11. The CPU 11a of the registration apparatus 11 receiving the settlement-acceptable command displays information for guiding a customer to the settlement apparatus 12, i.e., the settlement-acceptable command transmission source, on the touch panel 11f Meanwhile, the CPU 11a of the registration apparatus 11 receiving the settlement-unacceptable command displays information for notifying that settlement cannot be carried out.

Description is further made with regard to FIG. 5.

The CPU 11a waits for a sign-off operation in Act 8. The store clerk 21 who completes an operation of the registration apparatus 11 performs the sign-off operation. For example, since the image of the "sign-off reception" button is displayed on a part of the screen on the touch panel 11f of the registration apparatus 11 in the sign-on state, the store clerk 21 touches the "sign-off reception" button.

If the above operation is performed, the CPU 11a recognizes that the sign-off operation is performed. If the sign-off operation is performed (YES in Act 8), the CPU 11a clears the operator ID memory 52 in Act 9. Thereafter, the CPU 11a returns to the processing in Act 2 and sets the sign-on flag SF to "0". The CPU 11a waits for a next sign-on operation.

As such, if entering the sign-off state, the registration apparatus 11 cannot perform various processing such as sales registration of commodity, generation of settlement data, and transmission of the settlement data until authentication of an operator caused by the next sign-on operation is successful.

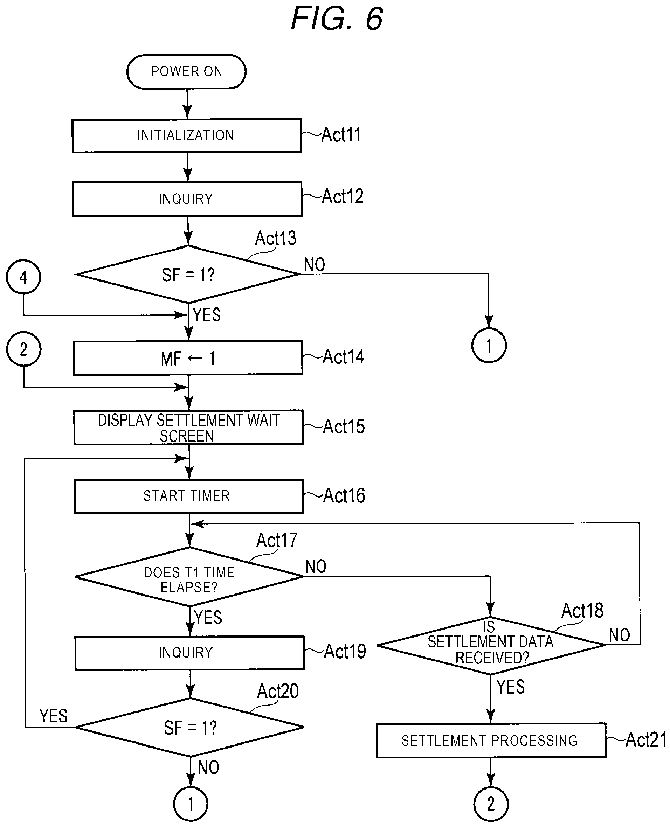

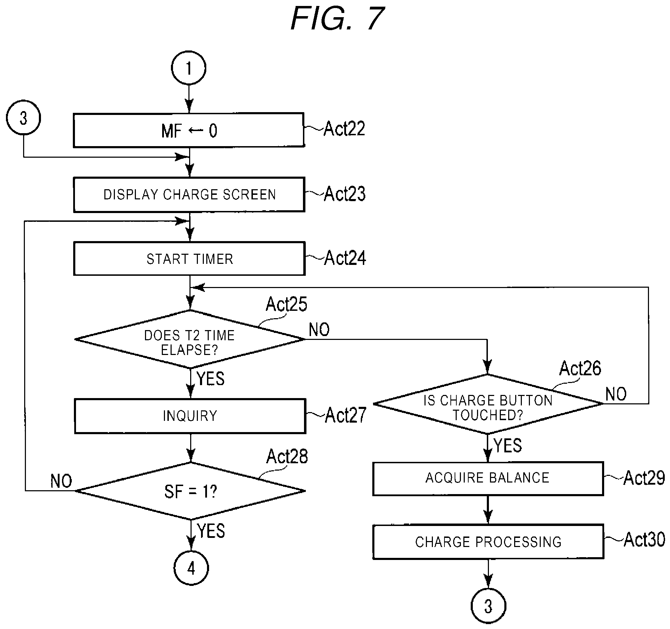

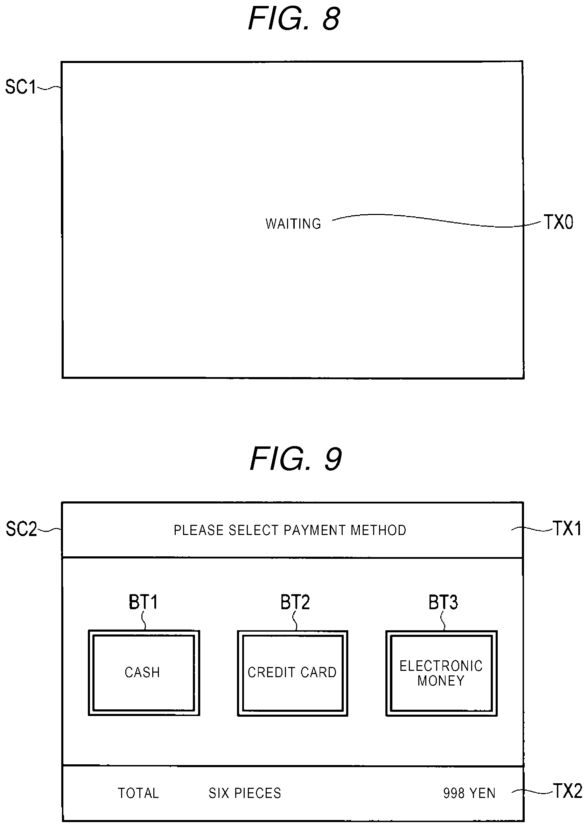

FIGS. 6 and 7 are flowcharts illustrating the main sequence of the information processing performed by the CPU 12a of the settlement apparatus 12. FIGS. 8 to 11 illustrate transition examples of a screen displayed on the touch panel 12f while the CPU 12a of the settlement apparatus 12 performs the information processing. If the settlement apparatus 12 is power on, the CPU 12a starts the information processing of the sequences illustrated in the flowcharts of FIGS. 6 and 7. The processing follows a control program stored in the ROM 12b or the auxiliary storage unit 12d. Contents of the processing described below are merely examples, and various processing capable of achieving the same results can be appropriately used. In addition, contents of screens illustrated in FIGS. 8 to 11 are also examples, and any contents are acceptable regardless of the screen as long as the same results can be achieved.

If the power supply is turned on, the CPU 12a performs initialization in Act 11 in FIG. 6. The RAM 12c is cleared by the initialization. In addition, devices such as the scanner 12e, the touch panel 12f, the printer 12g, the card reader/writer 12j, and the electronic money reader/writer 12k are reset.

If the initialization is completed, the CPU 12a inquires an operation state to the registration apparatus 11 linked to the settlement apparatus 12 in Act 12. The CPU 12a generates a status inquiry command including the registration apparatus ID stored in the link ID storage unit 44 and the settlement apparatus ID stored in the settlement apparatus ID storage unit 41, and outputs the state inquiry command to the network 13 through the communication unit 12h. The status inquiry command output from the settlement apparatus 12 is transmitted through the network 13, and is received by the registration apparatus 11 in which the registration apparatus ID included in the command is stored in the registration apparatus ID storage unit 31.

The CPU 11a of the registration apparatus 11 receiving the status inquiry command generates a response command including information of the sign-on flag SF stored in the sign-on flag memory 51 and the settlement apparatus ID included in the status inquiry command, and outputs the response command to the network 13 through the communication unit 11h. The response command output from the registration apparatus 11 is transmitted through the network 13, and is received by the settlement apparatus 12 in which the settlement apparatus ID included in the command is stored in the settlement apparatus ID storage unit 41.

The CPU 12a outputting the status inquiry command in Act 12 waits for the response command. If receiving the response command, the CPU 12a checks the sign-on flag SF included in the response command in Act 13. If the sign-on flag SF is "0" (YES in Act 13), that is, the linked registration apparatus 11 is in the sign-off state, the CPU 12a proceeds to processing in Act 22 in FIG. 7.

In contrast to this, if the sign-on flag SF is "1" (YES in Act 13), that is, the linked registration apparatus 11 is in the sign-on state, the CPU 12a sets the mode flag MF to "1" in Act 14. The CPU 12a sets a screen of the touch panel 12f as an settlement waiting screen SC1 in Act 15 (refer to FIG. 8).

FIG. 8 illustrates an example of the settlement waiting screen SC1. As illustrated in the figure, a text TX0 for notifying an operator (shopper 22 or store clerk 21) of waiting for settlement is displayed on the settlement waiting screen SC1.

As such, the settlement apparatus 12 operates in the link mode if the registration apparatus 11 of a link destination is in the sign-on state. The settlement apparatus 12 sets a screen of the touch panel 12f to the settlement waiting screen SC1 and waits for settlement data.

After displaying the settlement waiting screen SC1, the CPU 12a starts the timer 12n in Act 16. The CPU 12a monitors whether or not a predetermined time T1 in the link mode is measured by the timer 12n in Act 17.

If the time measured by the timer 12n does not reach the predetermined time T1 (NO in Act 17), the CPU 12a confirms whether or not the settlement data is received in Act 18. If the settlement data is not received (NO in Act 18), the CPU 12a returns to the processing in Act 17. Accordingly, the CPU 12a waits for until the time measured by the timer 12n elapses the predetermined time T1 or the settlement data is received in the processing in Act 17 and Act 18.

If the time measured by the timer 12n reaches the predetermined time T1 without receiving the settlement data (YES in Act 17), the CPU 12a inquires the operation state to the registration apparatus 11 linked to the settlement apparatus 12 in the same manner as Act 12 in Act 19. The CPU 12a confirms the operation state of the registration apparatus 11 in Act 20. If the sign-on flag received from the registration apparatus 11 is "1" and the registration apparatus 11 maintains the sign-on state (YES in Act 20), the CPU 11a returns to the processing in Act 16. The CPU 12a restarts the timer 12n, and enters a wait state in Act 17 and Act 18.

In contrast to this, if the sign-on flag received from the registration apparatus 11 is "0" and it is confirmed that the registration apparatus 11 enters the sign-off state (NO in Act 20), the CPU 11a proceeds to processing in Act 22 of FIG. 7.

On the other hand, in the wait state in Act 17 and Act 18 in FIG. 6, if the settlement data is received (YES in Act 18), the CPU 12a performs the settlement processing in Act 21. For example, the CPU 12a displays a payment method selection screen SC2 (refer to FIG. 9) on the touch screen 12f.

FIG. 9 illustrates an example of the payment method selection screen SC2. As illustrated in the figure, images of a text TX1, a text TX2, a "cash" button But1, a "credit" button BT2, and an "electronic money" button BT3 are displayed on the payment method selection screen SC2. The text TX1 is text information for instructing an operator (shopper 22 or store clerk 21) to select a payment method. The text TX2 is character information for indicating a total quantity and a total amount included in settlement data of transaction. The "cash" button BT1 is touched if an operator (settlement person) pays the amount with cash. The "credit" button BT2 is touched if the operator (person for settlement) pays the amount with credit card. The "electronic money" button BT3 is touched if the operator (settlement person) pays the amount with electronic money.

The CPU 12a displaying the payment method selection screen SC2 waits for touching on the image of one of the "cash" button BT1, the "credit" button BT2, and the "electronic money" button BT3. If it is detected that the "cash" button BT1 is touched, the CPU 12a performs the settlement processing of transaction with cash. If it is detected that the "credit" button BT2 is touched, the CPU 12a performs the settlement processing of the transaction with a credit card. If it is detected that the "electronic money" button BT3 is touched, the CPU 12a performs the settlement processing of the transaction with electronic money. Since the settlement processing is well-known processing, a detailed description thereof is omitted.

A computer of the settlement apparatus 12 including the CPU 12a as a main element realizes a settlement unit by performing the processing in Act 21 in FIG. 6.

If the settlement processing is completed, the CPU 12a returns to the processing in Act 15. The CPU 12a displays the settlement wait screen SC1 on the touch panel 12f.

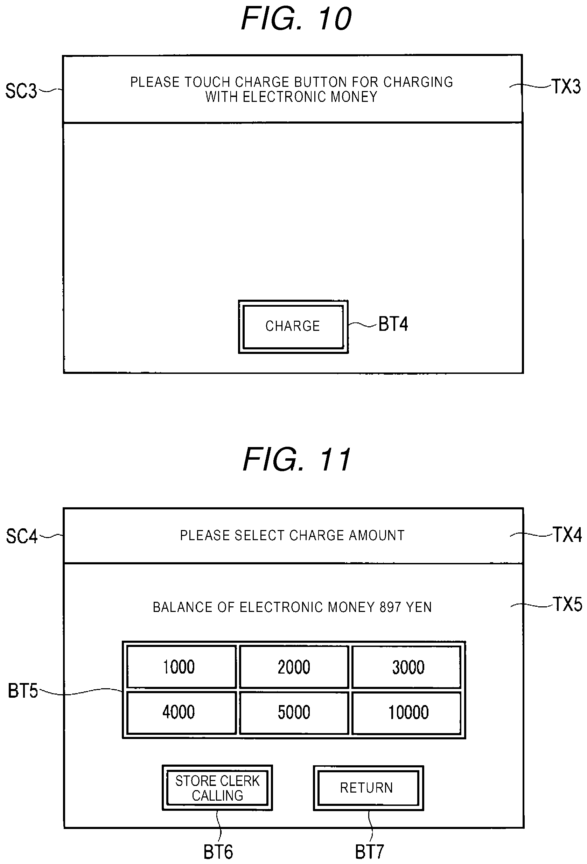

In Act 13 or Act 20, if the linked registration apparatus 11 is in the sign-off state, the CPU 12a sets the mode flag MF to "0" in Act 22 in FIG. 7. The CPU 12a displays a charge screen SC3 (refer to FIG. 10) on the touch panel 12f in Act 23.

FIG. 10 illustrates an example of the charge screen SC3. As illustrated in the figure, images of a text TX3 and a "charge" button BT4 are displayed on the charge screen SC3. The text TX3 is character information for instructing an operator who charges electronic money to touch the "charge" button BT4. The "charge" button BT4 is touched if the operator charges electronic money.

The CPU 12a displaying the charge screen SC3 starts the timer 12n in Act 24. The CPU 12a monitors whether or not the timer 12n measures a predetermined time T2 in the stand-alone mode in Act 25.

If the time measured by the timer 12n does not reach the predetermined time T2 (NO in Act 25), the CPU 12a confirms whether or not the "charge" button BT3 is touched in Act 26. If the "charge" button BT3 is not touched (NO in ACT 26), the CPU 12a returns to the processing in Act 25. Accordingly, the CPU 12a waits for that the time measured by the timer 12n reaches the predetermined time T2 or the touch button BT3 is touched through the processing in Act 25 and Act 26.

If the time measured by the timer 12n reaches the predetermined time T2 without touching the "charge" button B3 (YES in Act 25), the CPU 12a inquires an operation state of the registration apparatus 11 linked to the settlement apparatus 12 in the same manner as Act 12 and Act 20, in Act 27. The CPU 12a confirms the operation state of the registration apparatus 11 in Act 28. If the sign-on flag received from the registration apparatus 11 is "0" and the registration apparatus 11 maintains the sign-off state (NO in Act 28), the CPU 11a returns to the processing in Act 24. The CPU 12a restarts the timer 12n and enters the waiting state in Act 25 and Act 26.

On the other hand, if the sign-on flag received from the registration apparatus 11 is "1" and it is confirmed that the registration apparatus 11 is in the sign-on state (YES in Act 28), the CPU 11a proceeds to the processing in Act 14 in FIG. 6. The CPU 12a sets the mode flag MF to "1". Then, the CPU 12a displays the settlement wait screen SC1 on the touch panel 12f.

If it is detected that the "charge" button BT3 is touched in the wait states in Act 25 and Act 26 (YES in ACT 26), the CPU 12a operates the electronic money reader/writer 12k in Act 29 to read balance of electronic money recorded in an information recording medium such as an IC card or in an information communication terminal such as a smartphone or a tablet terminal. Next, the CPU 12a performs a charge processing in Act 30. For example, the CPU 12a displays a charge amount selection screen SC4 (see FIG. 11) on the touch panel 12f.

FIG. 11 illustrates an example of the charge amount selection screen SC4. As illustrated in the figure, images of a text TX5, a text TX6, an "amount" button BT5, a "store clerk calling" button BT6, and a "return" button BT7 are displayed on the charge amount selection screen SC4. The text TX5 is character information for instructing an operator (charge user) to select a charge amount. The text TX6 is character information for indicating the balance of the electronic money read in the processing in Act 29. The "amount" button BT5 is touched if the operator (charge user) selects the charge amount. Six charge varieties, e.g., 1,000 yen, 2,000 yen, 3,000 yen, 4,000 yen, 5,000 yen, and 10,000 yen can be selected on the charge amount selection screen SC4 in FIG. 11. The "store clerk calling" button BT6 is touched if the operator (charge user) needs assistance of a store clerk. The "return" button BT7 is touched if the operator cancels the charge.

The CPU 12a displaying the charge amount selection screen SC4 waits for touching the image of one of the "amount" button BT5, the "store clerk calling" button BT6, and the "return" button BT7. If it is detected that the "amount" button BT5 is touched, the CPU 12a waits until the amount of money designated by the "amount" button BT5 is deposited in the automatic change machine 12m. If the amount of money designated is deposited, the CPU 12a operates the electronic money reader/writer 12k to add the amount of money designated by the "amount" button BT5 to the balance of the electronic money recorded in the information recording medium such as an IC card or the information communication terminal such as a smartphone or a tablet terminal. Such a charge processing is well known, and thus, a detailed description thereof is omitted.

If the charging processing is completed, the CPU 11a returns to the processing in Act 23. The CPU 12a displays the charge screen SC3 on the touch panel 12f.

If it is detected that the "store clerk calling" button BT6 on the charge amount selection screen SC4 is touched, the CPU 12a generates a store clerk calling command to output the generated command to the network 13 through the communication unit 12h. The store clerk calling command includes the settlement apparatus ID stored in the settlement apparatus ID storage unit 41. The store clerk calling command output from the settlement apparatus 12 is transmitted to the network 13 and is received by all the registration apparatuses 11 connected to the network 13. However, the CPU 11a of the registration apparatus 11 in the sign-off state does not receive the store clerk calling command. The CPU 11a of the registration apparatus 11 in the sign-on state displays information for notifying that there is a call from a user of the settlement apparatus 12 identified by the settlement apparatus ID included in the command on the touch panel 11f in response to reception of the store clerk calling command.

If it is detected that the "return" button BT7 is touched, the CPU 11a returns to the processing in Act 23 and displays the charge screen again on the touch panel 12f.

A computer of the settlement apparatus 12 including the CPU 12a as main element realizes a monitoring unit by performing each processing in Act 12, Act 13, Act 19, and Act 20 in FIG. 6, and Act 27 and Act 28 in FIG. 7. In addition, the computer realizes a mode control unit by performing each processing in Act 14 to Act 18 and Act 21 in FIG. 6 and Act 22 to Act 26, Act 29, and Act 30 in FIG. 7.

As such, in the checkout system 10 of the present embodiment, an operation mode of the settlement apparatus 12 is determined depending on an operation state of the linked registration apparatus 11. In detail, if the registration apparatus 11 is in the sign-on state, that is, the registration apparatus is in an activating state, the settlement apparatus 12 operates in the link mode. The settlement apparatus 12 in the link mode can perform settlement processing based on the settlement data generated by the registration apparatus 11. In contrast to this, if the registration apparatus 11 is in the sign-off state, that is, the registration apparatus 11 is in a non-operation state, the settlement apparatus 12 operates in the stand-alone mode. In the settlement apparatus 12 of the stand-alone mode, the charge function of electronic money is valid.

Therefore, according to the present embodiment, since the linked registration apparatus 11 is in the sign-off state, it is possible to effectively use the settlement apparatus 12 which cannot perform the settlement processing on the basis of the settlement data, as a charge machine of electronic money. As a result, it is possible to effectively use resources such as hardware constituting the checkout system 10.

In the present embodiment, a predetermined time in the link mode is set to T1, and a predetermined time in the stand-alone mode is set to T2. The predetermined time T1 and the predetermined time T2 may be equal to or different from each other. For example, if the predetermined time T1 is sufficiently longer than the predetermined time T2, the number of inquiry signals generated in the link mode can be reduced. Even if the settlement apparatus 12 is not set to the stand-alone mode immediately after the linked registration apparatus 11 enters the sign-off state, settlement work is successfully carried out. In contrast, if the settlement apparatus 12 is not set to the link mode immediately after the linked registration apparatus 11 enters the sign-on state, it may cause inefficiency in the settlement work. Therefore, if the time T1 and the time T2 are set to appropriate values, it is possible to achieve an appropriate operation of the settlement work while saving labor.

Hereinafter, a modification of the embodiment is described.

In the aforementioned embodiment, the registration apparatus 11 whose status is in a sign-on state is defined as the registration apparatus 11 in an operating state, and the registration apparatus 11 whose status is in a sign-off state is defined as the registration apparatus 11 in a non-operating state. The registration apparatus 11 in the non-operating state is not limited to the registration apparatus 11 whose status is in the sign-off state. For example, the registration apparatus 11 that cannot return a response command to an inquiry command because the power supply is not turned on or failure occurs may also be defined to be in the non-operating state. Thus, it is possible to effectively use the settlement apparatus 12, linked to the registration apparatus 11 that is not activated or has a failure, as a charge machine of electronic money.

In the aforementioned embodiment, the settlement apparatus 12 periodically monitors a state of the registration apparatus 11. The monitoring unit is not limited thereto. For example, if the sign-on or sign-off state is changed, the registration apparatus 11 notifies the settlement apparatus 12 of the change, and the settlement apparatus 12 receiving the notification may monitor whether the linked registration apparatus 11 is in the sign-on state (operating state) or in the sign-off state (non-operating state). The settlement apparatus 12 does not have to periodically monitor the state of the registration apparatus 11, and thus, load of the CPU 12a thereof can be reduced.

In the aforementioned embodiment, the settlement apparatus 12 becomes necessarily in the stand-alone mode if the linked registration apparatus 11 is in the sign-off state, and allows the charge operation of electronic money. With respect to this point, for example, an option flag for determining whether or not to validate the stand-alone mode is stored in the auxiliary storage unit 12d of the settlement apparatus 12. Then, only the settlement apparatus 12 in the state in which the option flag validates the stand-alone mode is set to the stand-alone mode, and the other settlement apparatuses 12 maintain the link mode. With the above constitution, for example, one of the two settlement apparatuses 12 disposed in one checkout lane can be acted as a charge machine of electronic money and the other can be set in an idle state.

In the embodiment, the settlement apparatus 12 in the stand-alone mode allows a charge operation of electronic money. An operation allowed by the settlement apparatus 12 in the stand-alone mode is not limited to the charge operation. For example, sales registration of commodity, generation of settlement data, and settlement processing based on the settlement data may also be allowed. The settlement apparatus 12 in the stand-alone mode may operate as a self-checkout POS terminal. Thus, it is possible to easily realize a semi-self checkout lane and a self-checkout lane in combination.

In addition, in the settlement apparatus 12 in the stand-alone mode, a case in which the settlement apparatus allows a charge operation of electronic money and a case the settlement apparatus operates as a self-checkout POS terminal may be selectable. With this constitution, it is possible to easily adopt an operation such that some of the settlement apparatuses 12 are set as self-checkout POS terminals and the other the settlement apparatuses 12 are set as charge machines of electronic money.

In the aforementioned embodiment, the settlement apparatus 12 determines a state of the registration apparatus 11, using the sign-on flag SF. Information for determining the state of the registration apparatus 11 is not limited to the sign-on flag SF. For example, if an operator ID is stored in the operator ID memory 52, the state of the registration apparatus 11 may be determined as a sign-on state, and if the operator ID is not stored therein, the state may be determined as a sign-off state. Even in this case, the same or similar results and effect as the aforementioned embodiment can be achieved.

Transfer of the settlement apparatus 12 is generally performed in a state where a program such as a control program is stored in the ROM 12b. However, the embodiment is not limited thereto, and a control program or the like separately transmitted from a computer device may be written to a writable storage device included in the computer device in accordance with an operation performed by a user or the like. The transfer of the control program and the like can be performed by recording the program in a removable recording medium or by communication through a network. The recording medium may be in any form as long as the medium can store a program as in a CD-ROM and a memory card and a device can read the program. In addition, a function obtained by installing or downloading a program may be one which can be realized in cooperation with an operating system (OS) or the like in the device.

While certain embodiments have been described, these embodiments have been presented by way of example only, and are not intended to limit the scope of the invention. Indeed, the novel methods and systems described herein may be embodied in a variety of other forms; furthermore, various omissions, substitutions and changes in the form of the methods and systems described herein may be made without departing from the scope of the invention. The accompanying claims and their equivalents are intended to cover such forms or modifications as would fall within the scope of the invention.

## Claims

1. A checkout system comprising:
a registration apparatus configured to generate settlement data necessary for settlement of transaction;
a settlement apparatus configured to perform settlement processing on the basis of the settlement data generated by the registration apparatus; and
a network configured to connect the registration apparatus with the settlement apparatus to facilitate transmission of the settlement data from the registration apparatus to the settlement apparatus;
wherein the settlement apparatus comprises:
a monitoring module configured to monitor whether the registration apparatus is in an operating state or a non-operating state, and
a mode control module configured to enable the settlement apparatus to operate in a link mode in which the settlement apparatus is linked to the registration apparatus if the registration apparatus is in the operating state or to enable the settlement apparatus to operate in a stand-alone mode in which the settlement apparatus is not linked to the registration apparatus if the registration apparatus is in the non-operating state.

2. The system according to claim 1, wherein the registration apparatus comprises a state storage unit configured to store information for identifying whether the registration apparatus is in a sign-off state in which the registration apparatus waits for a sign-on operation or the registration apparatus is in a sign-on state in which the sign-on is being received, and
wherein the monitoring module of the settlement apparatus recognizes that the registration apparatus is in the operating state if the information stored in the state storage unit indicates the sign-on state, and the registration apparatus is in the non-operating state if the information stored in the state storage unit indicates the sign-off state.

3. The system according to claim 1 or 2, wherein the settlement apparatus accepts a charge operation for electronic money in the stand-alone mode.

4. The system according to any one of claims 1 to 3, comprising a plurality of settlement apparatuses and a plurality of registration apparatus.

5. The system according to any one of claims 1 to 4, wherein the network comprises a wireless network.

6. The system according to any one of claims 1 to 5, wherein the network comprises a partially wired network and a partially wireless network.

7. A settlement apparatus which is connected to a registration apparatus through a network, comprising:
a settlement module configured to perform settlement processing on the basis of settlement data, necessary for settlement of a transaction, which is transmitted from the registration apparatus through the network;
a monitoring module configured to monitor whether the registration apparatus is in an operating state or a non-operating state; and
a mode control module configured to operate the settlement apparatus in a link mode in which the settlement apparatus is linked to the registration apparatus if the registration apparatus is in the operating state or to operate the settlement apparatus in a stand-alone mode in which the settlement apparatus is not linked to the registration apparatus if the registration apparatus is in the non-operating state.

8. The settlement apparatus according to claim 7, wherein the settlement apparatus accepts a charge operation for electronic money in the stand-alone mode.

9. A control method for operating a settlement apparatus that performs settlement processing on the basis of a settlement data from a registration apparatus in a link mode or a stand-alone mode, comprising:
monitoring whether the registration apparatus is in an operating state or a non-operating state; and
operating the settlement apparatus in the link mode in which the settlement apparatus is linked to the registration apparatus if the registration apparatus is in the operating state or in a stand-alone mode in which the settlement apparatus is not linked to the registration apparatus if the registration apparatus is in the non-operating state.

10. The method according to claim 9, further comprising:
storing information for identifying whether the registration apparatus is in a sign-off state in which the registration apparatus waits for a sign-on operation or the registration apparatus is in a sign-on state in which the sign-on is being received, and
recognizing that the registration apparatus is in the operating state if the information stored indicates the sign-on state, and the registration apparatus is in the non-operating state if the information stored indicates the sign-off state.

11. The method according to claim 9 or 10, further comprising:
accepting a charge operation for electronic money in the stand-alone mode.

12. The method according to any one of claims 9 to 11, wherein the method comprises operating a plurality of settlement apparatuses on the basis of settlement data from a plurality of registration apparatus.

13. The method according to any one of claims 9 to 12, wherein the method comprises operating the settlement apparatus on the basis of settlement data from the registration apparatus in the link mode.

14. The method according to any one of claims 9 to 13, wherein the method comprises operating the settlement apparatus on the basis of settlement data from the registration apparatus in the stand-alone mode.

15. The method according to any one of claims 9 to 14, further comprising:
accepting a charge operation for electronic money in the stand-alone mode.
